# EUROPÄISCHE PATENTSCHRIFT

(11) **EP 1 100 299 B1**
(45) Veröffentlichungstag und Bekanntmachung des Hinweises auf die Patenterteilung: **10.05.2006**
(21) Anmeldenummer: 00123962.3
(22) Anmeldetag: 03.11.2000
(51) Int. Cl.: H05K 7/20

(54) **Vorrichtung zur Erhöhung der Lebensdauer eines Elektronikgerätes**
Device to extend the life of an electronic apparatus
Dispositif pour prolonger la durée de vie d'un appareil électronique

(30) Priorität: 11.11.1999 DE 19954125
(43) Veröffentlichungstag der Anmeldung: 16.05.2001
(73) Patentinhaber: Grundig Multimedia B.V., 1083HJ Amsterdam (NL)
(72) Erfinder: Fischbeck, Udo, Dipl.Ing., 90766 Fürth (DE)
(74) Vertreter: Pröll, Jürgen

(56) Entgegenhaltungen:
- EP-A- 0 923 237
- PATENT ABSTRACTS OF JAPAN vol. 1996, no. 07, 31. Juli 1996 (1996-07-31) & JP 08 065612 A (FUJITSU GENERAL LTD), 8. März 1996 (1996-03-08)

## Beschreibung

Die Erfindung betrifft eine Vorrichtung zur Erhöhung der Lebensdauer eines Gerätes der Unterhaltungselektronik.

Aus den Zeitschriften RFE, Heft 2, 1997, Seiten 18-20, und Fernseh- und Kinotechnik, 52. Jahrgang, Heft 11, 1998, Seiten 662 - 668, sind bereits Fernsehgeräte bekannt, die ein Plasmadisplay aufweisen. Derartige Fernsehgeräte haben im Vergleich zu Fernsehgeräten, die mit einer Bildröhre versehen sind, eine vergleichsweise hohe Leistungsaufnahme. Diese führt im Betrieb des Gerätes dazu, daß eine Erhitzung insbesondere der im Bereich des Displays angeordneten Elektronikbaugruppen auftritt, was ohne geeignete Gegenmaßnahmen zu deren Zerstörung führen kann.

Aus diesem Grund werden bei Fernsehgeräten mit einem Plasmadisplay Ventilatoren eingesetzt, deren Drehzahl von einer Steuerschaltung eingestellt wird.

Aus der DE-A-198 00 846 ist bereits eine Vorrichtung zur Vermeidung einer Überhitzung eines Displaytreibers-Bausteins eines Plasmadisplays bekannt. Der Diplaytreiber-Baustein weist mehrere Displaytreiber-Elemente auf, von denen jeder einem Bildbereich des auf dem Display dargestellten Bildes zugeordnet ist. Weiterhin weist die Vorrichtung eine Meßeinheit zur Erzeugung eines Meßsignals auf, welches eine Information über die Leistungsaufnahme des Displays enthält. Die Meßeinheit ist ausgangsseitig mit einer Steuersignalerzeugungseinheit verbunden, welche ein Steuersignal zur Reduzierung der Helligkeit der auf dem Display dargestellten Bildsignale erzeugt. Die Steuersignalerzeugungseinheit ist zur Ermittlung eines bildbereichsweisen Meßsignals vorgesehen, um ein die Helligkeit der auf dem Display dargestellten Signale reduzierendes Steuersignal dann zu erzeugen, wenn eines der Displaytreiber-Elemente einer übermäßigen Belastung ausgesetzt ist.

Die DE-PS-197 54 804 betrifft eine Vorrichtung zur Kühlung eines Displays mit einem Ventilator zur Erzeugung einer das Display kühlenden Luftströmung, einem Temperaturfühler zur Erfassung der im Bereich des Displays herrschenden Temperatur und einer ausgangsseitig mit dem Temperaturfühler verbundenen Steuersignalerzeugungseinheit zur Erzeugung eines Steuersignals für den Ventilator. Weiterhin weist die Vorrichtung eine Schaltung zur Auswertung des dem Display zugeführten Videosignals auf. Diese ist ausgangsseitig mit der Steuersignalerzeugungseinheit verbunden. Die Steuersignalerzeugungseinheit erzeugt das Steuersignal für den Ventilator unter Berücksichtigung des Ausgangssignals der Schaltung zur Auswertung des dem Display zugeführten Videosignals.

Aus der DE-A-197 56 653 ist eine Vorrichtung zur Vermeidung einer Überhitzung eines Plasmadisplays bekannt, die eine Meßeinheit zur Erzeugung einer Information über die Leistungsaufnahme des Displays aufweist und ausgangsseitig mit einer Steuersignalerzeugungseinheit zur Erzeugung eines Steuersignals verbunden ist. Das Steuersignal beaufschlagt eine Schaltung zur Reduzierung der Helligkeit der auf dem Display dargestellten Bildsignale. Weiterhin weist die Vorrichtung einen Temperaturfühler zur Erfassung der im Bereich des Displays herrschenden Temperatur auf, dessen Ausgangssignal zur Erzeugung des genannten Steuersignals beiträgt.

Aus Patent Abstracts of Japan, vol. 1996, no. 07, 31. Juli 1996 (1996-07-31) und JP 08 065612 A (Fujitsu General Ltd.), 8. März 1996 (1996-03-08) ist ein Projektor offenbart, der mit zwei Ventilatoren ausgestattet ist. Die Ventilatoren dienen zur Erzeugung eines Luftstroms zur Kühlung des Projektors. Im Weiteren ist ein Mikrofon 4 vorhanden, welches an der Außenseite des Gehäuses des Projektors angeordnet ist. Dieses Mikrofon dient zur Aufnahme von Geräuschen, welche insbesondere von dem in der Nähe angeordneten Ventilator stammen. In Abhängigkeit dieses Mikrofons wird die Drehzahl der Ventilatoren gesteuert.

Aus EP 0 923 237 A ist eine Vorrichtung zur Kühlung eines Displays offenbart. Diese Vorrichtung weißt einen Ventilator zur Erzeugung einer das Display kühlenden Luftströmung sowie einen Temperaturfühler zur Erfassung der im Bereich des Displays herrschenden Temperatur auf. Anhand der im Gerät herrschenden Temperatur wird ein Signal zur Ansteuerung des Ventilators gewonnen.

Ausgehend von diesem Stand der Technik liegt der Erfindung die Aufgabe zu Grunde, einen Weg aufzuzeigen, wie die Lebensdauer eines mit einem Ventilator versehenen Gerätes der Unterhaltungselektronik erhöht werden kann.

Diese Aufgabe wird durch eine Vorrichtung mit dem in den Ansprüchen 1 und 4 angegebenen Merkmalen gelöst. Vorteilhafte Ausgestaltungen und Weiterbildungen der Erfindung sind in den abhängigen Ansprüchen angegeben.

Die Vorteile der Erfindung bestehen insbesondere darin, daß die Drehzahl des Ventilators stets so eingestellt wird, daß sie zwar einerseits so hoch wie möglich ist, daß aber andererseits das vom Ventilator selbst erzeugte Geräusch geringer ist als das Umgebungsgeräusch und/oder die Lautstärke des von den Lautsprechern des Gerätes abgestrahlten Schallsignals, so daß das Ventilatorgeräusch vom Betrachter bzw. Zuhörer entweder gar nicht wahrgenommen werden kann oder zumindest als nicht störend empfunden wird. Da - wie vorstehend ausgeführt wurde - die Ventilatordrehzahl stets so hoch wie möglich eingestellt wird, erfolgt immer eine optimierte Gerätekühlung und damit eine Erhöhung der Lebensdauer des Gerätes.

Weitere vorteilhafte Eigenschaften der Erfindung ergeben sich aus deren beispielhafter Erläuterung anhand der Figuren.

Es zeigt:
- FIG 1: eine Skizze eines Fernsehempfängers gemäß der Erfindung,
- FIG 2: ein Blockschaltbild eines ersten Ausführungsbeispiels für die Erfindung und
- FIG 3: ein Blockschaltbild eines zweiten Ausführungsbeispiels für die Erfindung.

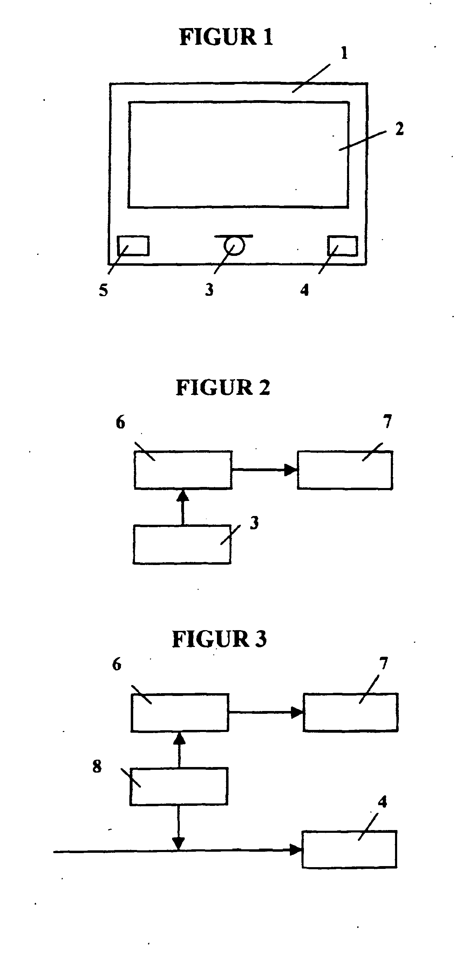

Die Figur 1 zeigt eine Skizze eines Fernsehempfängers gemäß der Erfindung. Der dargestellte Fernsehempfänger weist ein Plasmadisplay 2, ein Mikrophon 3, einen linken Lautsprecher 4 und einen rechten Lautsprecher 5 auf. Weiterhin ist er in seinem Inneren ― wie nachfolgend anhand zweier Ausführungsbeispiele erläutert wird - mit einem Mikrocomputer 6, einem Ventilator 7 und einem Stromfühler 8 versehen.

Gemäß dem in der Figur 2 gezeigten ersten Ausführungsbeispiel wird im Betrieb des Fernsehempfängers durch das Mikrophon 3 das Umgebungsgeräusch aufgenommen. Zu diesem Umgebungsgeräusch tragen sowohl die von den Lautsprechern 4 und 5 abgestrahlten Schallsignale als auch extern erzeugte Geräusche bei. Die extern erzeugten Geräusche werden beispielsweise von Fahrzeugen auf einer vorbeiführenden Straße oder auch von anwesenden Personen erzeugt, die gerade eine Party feiern oder eine lebhafte Diskussion miteinander führen.

Das Ausgangssignal des Mikrophons 3 wird einer Steuersignalerzeugungseinheit 6 zugeführt, die in Form eines Mikrocomputers realisiert ist. Dieser ist zur Erzeugung eines Steuersignals für den Ventilator 7 vorgesehen. Der Mikrocomputer ist derart programmiert, daß er dann, wenn die gemessene Umgebungslautstärke einen vorgegebenen Schwellenwert übersteigt, ein die Drehzahl des Ventilators 7 veränderndes Steuersignal zur Verfügung stellt. Liegt die gemessene Umgebungslautstärke über dem Schwellenwert und steigt sie weiter an, dann wird ein die Drehzahl des Ventilators erhöhendes Steuersignal bereitgestellt. Bei sinkender Umgebungslautstärke generiert der Mikrocomputer 6 ein die Drehzahl des Ventilators reduzierendes Steuersignal. Vorzugsweise nimmt der Mikrocomputer 6 die genannten Veränderungen der Ventilatordrehzahl derart vor, daß ein linearer Zusammenhang zwischen der Ventilatordrehzahl und der gemessenen Umgebungslautstärke besteht.

Gemäß dem in der Figur 3 gezeigten zweiten Ausführungsbeispiel wird im Betrieb des Fernsehempfängers mittels des Stromfühlers 8 die Stromstärke des zu einem Lautsprecher 4 des Gerätes geleiteten Stromsignals gemessen. Diese gemessene Stromstärke gibt Auskunft über die Lautstärke des vom Lautsprecher 4 abgestrahlten Schallsignals.

Das Ausgangssignal des Stromfühlers 8 wird einer Steuersignalerzeugungseinheit 6 zugeführt, die in Form eines Mikrocomputers realisiert ist. Dieser ist zur Erzeugung eines Steuersignals für den Ventilator 7 vorgesehen. Der Mikrocomputer 6 ist derart programmiert, daß er dann, wenn die gemessene Stromstärke einen vorgegebenen Schwellenwert übersteigt, ein die Drehzahl des Ventilators 7 veränderndes Steuersignal zur Verfügung stellt. Liegt die gemessene Stromstärke über dem Schwellenwert und steigt sie weiter an, dann wird ein die Drehzahl des Ventilators erhöhendes Steuersignal bereitgestellt. Bei sinkender gemessener Stromstärke generiert der Mikrocomputer 6 ein die Drehzahl des Ventilators reduzierendes Steuersignal. Vorzugsweise nimmt der Mikrocomputer 6 die genannten Veränderungen der Ventilatordrehzahl derart vor, daß ein linearer Zusammenhang zwischen der Ventilatordrehzahl und der gemessen Stromstärke besteht.

Bei den vorstehend beschriebenen Ausführungsbeispielen wird die Drehzahl des eine kühlende Luftströmung erzeugenden Ventilators 7 in Abhängigkeit vom Ausgangssignal eines Lautstärkemessers stets so eingestellt, daß sie möglichst hoch ist, gleichzeitig aber sichergestellt ist, daß das vom Ventilator selbst erzeugte Geräusch für die anwesenden Personen nicht wahrnehmbar ist oder zumindest nicht als störend empfunden wird. Aufgrund der Einstellung der Drehzahl des Ventilators auf einen möglichst hohen Wert erfolgt stets eine im Hinblick auf die gemessene Lautstärke optimierte Kühlung des Gerätes. Dies führt zu einer Erhöhung der Lebensdauer des Gerätes.

Die vorstehend beschriebene Einstellung der Drehzahl des Ventilators kann in vorteilhafter Weise mit weiteren Maßnahmen zur Displaykühlung gemeinsam angewendet werden, um die Gerätekühlung weiter zu optimieren. Derartige weitere Maßnahmen zur Displaykühlung sind beispielsweise in den oben genannten Druckschriften DE-A-198 00 846, DE-PS-197 54 804 und DE-A-197 56 653 angegeben.

## Patentansprüche

1. Fernsehsignalempfänger (1) mit einer Fernsehsignalanzeigeeinheit (2), einem linken und rechten Lautsprecher (4, 5) einem Mikrophon (3, 8) und einer Vorrichtung zur Erhöhung der Lebensdauer des Fernsehsignalempfängers (1), mit
- einem Ventilator (7) zur Erzeugung einer den Fernsehsignalempfänger (1) kühlenden Luftströmung und
- einer Steuersignalerzeugungseinheit (6) zur Erzeugung eines Steuersignals für den Ventilator (7), **dadurch gekennzeichnet, dass**
- das Mikrophon (3; 8) in etwa mittig zwischen dem linken Lautsprecher (4) und dem rechten Lautsprecher (5) angeordnet ist, wodurch das Mikrophon (3; 8) sowohl die von den Lautsprechern (4, 5) abgestrahlten Schallsignale, als auch extern erzeugte Geräusche aufnimmt, und
- der Ausgang des Mikrophons (3; 8) mit der Steuersignalerzeugungseinheit (6) verbunden ist, wobei die Steuersignalerzeugungseinheit (6) das Steuersignal für den Ventilator (7) unter Berücksichtigung des Ausgangssignals des Mikrophons (3, 8) erzeugt.

2. Fernsehsignalempfänger (1) nach Anspruch 1,
**dadurch gekennzeichnet,**
**dass** die Steuersignalerzeugungseinheit (6) bei erhöhter Lautstärke die Drehzahl des Ventilators (7) erhöht und bei reduzierter Lautstärke die Drehzahl des Ventilators (7) erniedrigt.

3. Fernsehsignalempfänger (1) nach Anspruch 2,
**dadurch gekennzeichnet,**
**dass** die Steuersignalerzeugungseinheit (6) die Drehzahl des Ventilators (7) erst dann erhöht, wenn die Umgebungslautstärke einen vorgegebenen Schwellenwert übersteigt.

4. Fernsehsignalempfänger (1) mit einer Fernsehsignalanzeigeeinheit (2), einem linken und rechten Lautsprecher (4, 5) einem Mikrophon (3, 8) und einer Vorrichtung zur Erhöhung der Lebensdauer des Fernsehsignalempfängers (1), mit einem Ventilator (7) zur Erzeugung einer den Fernsehsignalempfänger (1) kühlenden Luftströmung und einer Steuersignalerzeugungseinheit (6) zur Erzeugung eines Steuersignals für den Ventilator (7), dass der Fernsehsignalempfänger (1) mindestens einen Lautsprecher (4; 5) und einen Lautstärkemesser (3; 8) aufweist,
**dadurch gekennzeichnet,**
**dass** der Lautstärkemesser (3, 8) einen Stromfühler (8) aufweist, der zur Messung des dem Lautsprecher (4, 5) des Fernsehsignalempfängers (1) zugeführten Stromes dient und
**dass** der Ausgang des Lautstärkemesser (3; 8) mit der Steuersignalerzeugungseinheit (6) verbunden ist, wobei
die Steuersignalerzeugungseinheit (6) das Steuersignal für den Ventilator (7) unter Berücksichtigung des Ausgangssignals des Lautstärkemessers (3, 8) erzeugt.

5. Fernsehsignalempfänger (1) nach Anspruch 4,
**dadurch gekennzeichnet,**
**dass** die Steuersignalerzeugungseinheit (6) die Drehzahl des Ventilators (7) erst dann erhöht, wenn die gemessene Stromstärke einen vorgegebenen Schwellenwert übersteigt.

6. Fernsehsignalempfänger (1) nach einem der vorhergehenden Ansprüche,
**dadurch gekennzeichnet,**
**dass** die Steuersignalerzeugungseinheit (6) die Drehzahl des Ventilators in Abhängigkeit vom Ausgangssignal des Lautstärkemessers linear verändert.

7. Fernsehsignalempfänger (1) nach Anspruch 1,
**dadurch gekennzeichnet,**
**dass** die Fernsehsignalanzeigeeinheit (2) ein Plasmadisplay ist.

8. Fernsehsignalempfänger (1) nach einem der Ansprüche 1 bis 6,
**dadurch gekennzeichnet,**
**dass** die Steuersignalerzeugungseinheit (6) ein Mikrocomputer ist.

## Claims

1. Television-signal receiver (1) comprising a television signal display unit (2), a left-hand and right-hand loudspeaker (4, 5), a microphone (3, 8) and a device for prolonging the service life of the television-signal receiver (1), comprising
- a fan (7) for generating an airflow that cools the television-signal receiver (1)
- and a control-signal-generating unit (6) for generating a control signal for the fan (7),
**characterized in that**
- the microphone (3, 8) is disposed approximately centrally between the left-hand loudspeaker (4) and the right-hand loudspeaker (5), as a result of which the microphone (3, 8) picks up both the sound signals radiated by the loudspeakers (4, 5) and also externally generated noises, and
- the output of the microphone (3; 8) is connected to the control-signal-generating unit (6), wherein the control-signal-generating unit (6) generates the control signal for the fan (7) taking the output signal of the microphone (3, 8) into account.

2. Television-signal receiver (1) according to Claim 1, **characterized in that**, in the event of increased volume, the control-signal-generating unit (6) increases the rotational speed of the fan (7) and, in the event of decreased volume, it decreases the rotational speed of the fan (7).

3. Television-signal receiver (1) according to Claim 2, **characterized in that** the control-signal-generating unit (6) increases the rotational speed of the fan (7) only if the ambient volume exceeds a specified threshold value.

4. Television-signal receiver (1) comprising a television signal display unit (2), a left-hand and right-hand loudspeaker (4, 5), a microphone (3, 8) and a device for prolonging the service life of the television-signal receiver (1), comprising a fan (7) for generating an airflow that cools the television-signal receiver (1) and a control-signal-generating unit (6) for generating a control signal for the fan (7) and the television-signal receiver (1) has at least one loudspeaker (4, 5) and one volume meter (3; 8),
**characterized**
**in that** the volume meter (3, 8) has a current
sensor (8) that serves to measure the current fed to the loudspeaker (4, 5) of the television-signal receiver (1) and
**in that** the output of the volume meter (3; 8) is connected to the control-signal-generating unit (6), wherein the control-signal-generating unit (6) generates the control signal for the fan (7) taking the output signal of the volume meter (3, 8) into account.

5. Television-signal receiver (1) according to Claim 4, **characterized in that** the control-signal-generating unit (6) increases the rotational speed of the fan (7) only if the measured current level exceeds a specified threshold value.

6. Television-signal receiver (1) according to any one of the preceding claims, **characterized in that** the control-signal-generating unit (6) varies the rotational speed of the fan linearly as a function of the output signal of the volume meter.

7. Television-signal receiver (1) according to Claim 1, **characterized in that** the television-signal display unit (2) is a plasma display.

8. Television-signal receiver (1) according to any one of Claims 1 to 6, **characterized in that** the control-signal-generating unit (6) is a microcomputer.

## Revendications

1. Récepteur (1) de signaux de télévision comportant une unité (2) d'affichage des signaux de télévision, un haut-parleur de gauche et un haut-parleur de droite (4, 5), un microphone (3, 8), un dispositif pour accroître la durée de vie du récepteur (1) de signaux de télévision, comportant
- un ventilateur (7) pour produire un écoulement d'air refroidissant le récepteur (1) de signaux de télévision, et
- une unité (6) de production de signal de commande pour produire un signal de commande pour le ventilateur (7),
**caractérisé en ce que**
- le microphone (3; 8) est disposé approximativement au centre entre le haut-parleur de gauche (4) et le haut-parleur de droite (5), ce qui a pour effet que le microphone (3; 8) reçoit aussi bien les signaux acoustiques émis par les haut-parleurs (4, 5) que des bruits produits extérieurement, et
- la sortie du microphone (3; 8) est reliée à l'unité (6) de production du signal de commande, l'unité (6) de production du signal de commande produisant le signal de commande pour le ventilateur (7) en tenant compte du signal de sortie du microphone (3, 8).

2. Récepteur (1) de signaux de télévision selon la revendication 1, **caractérisé en ce que** l'unité (6) de production du signal de commande augmente la vitesse de rotation du ventilateur (7) dans le cas d'une intensité acoustique accrue et réduit la vitesse de rotation du ventilateur (7) dans le cas d'une intensité acoustique réduite.

3. Récepteur (1) de signaux de télévision selon la revendication 2, **caractérisé en ce que** l'unité (6) de production du signal de commande augmente la vitesse de rotation du ventilateur (7) uniquement lorsque l'intensité acoustique ambiante dépasse une valeur de seuil prédéterminée.

4. Récepteur (1) de signaux de télévision comportant une unité (2) d'affichage de signaux de télévision, un haut-parleur de gauche et un haut-parleur de droite (4, 5), un microphone (3, 8) et un dispositif pour accroître la durée de vie du récepteur (1) de signaux de télévision, un ventilateur (7) pour produire un écoulement d'air refroidissant le récepteur (1) de signaux de télévision et une unité (6) de production de signal de commande pour la production d'un signal de commande pour le ventilateur (7), le récepteur (1) de signaux de télévision comportant au moins un haut-parleur (4; 5) et un appareil (3; 8) de mesure de l'intensité acoustique;
**caractérisé en ce**
**que** l'appareil (3, 8) de mesure de l'intensité acoustique comporte un détecteur de courant (8), qui est utilisé pour mesurer le courant envoyé au haut-parleur (4, 5) du récepteur (1) de signaux de télévision, et
**que** la sortie de l'appareil (3; 8) de mesure de l'intensité acoustique est reliée à l'unité (6) de production du signal de commande, l'unité (6) de production du signal de commande produisant le signal de commande pour le ventilateur (7) en tenant compte du niveau de sortie de l'appareil (3, 8) de mesure de l'intensité acoustique.

5. Récepteur (1) de signaux de télévision selon la revendication 4, **caractérisé en ce que** l'unité (6) de production du signal de commande augmente la vitesse de rotation du ventilateur (7) uniquement lorsque l'intensité mesurée du courant dépasse une valeur de seuil prédéterminée.

6. Récepteur (1) de signaux de télévision selon l'une des revendications précédentes, **caractérisé en ce que** l'unité (6) de production du signal de commande modifie linéairement la vitesse de rotation du ventilateur en fonction du signal de sortie de l'appareil de mesure de l'intensité acoustique.

7. Récepteur (1) de signaux de télévision selon la revendication 1, **caractérisé en ce que** l'unité (2) d'affichage de signaux de télévision est un dispositif d'affichage à plasma.

8. Récepteur (1) de signaux de télévision selon l'une des revendications 1 à 6, **caractérisé en ce que** l'unité (6) de production du signal de commande est un micro-ordinateur.
